(19) Europäisches Patentamt
European Patent Office
Office européen des brevets

(11) **EP 2 842 608 B1**

(12) **EUROPÄISCHE PATENTSCHRIFT**

(45) Veröffentlichungstag und Bekanntmachung des Hinweises auf die Patenterteilung:
**21.02.2018 Patentblatt 2018/08**

(21) Anmeldenummer: **14182515.8**

(22) Anmeldetag: **27.08.2014**

(51) Int Cl.:
*A62C 4/00* *(2006.01)*          *B22D 19/02* *(2006.01)*
*A62C 3/16* *(2006.01)*          *B29K 705/12* *(2006.01)*

(54) **Verfahren zur Herstellung einer Druckentlastungsvorrichtung für ein explosionsgeschütztes Gehäuse**

Method for the production of a pressure release device for a housing with flameproof encapsulation

Procédé de fabrication du dispositif de mise hors pression pour un boîtier anti-déflagrant

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.08.2013 DE 102013109259**

(43) Veröffentlichungstag der Anmeldung:
**04.03.2015 Patentblatt 2015/10**

(73) Patentinhaber: **R. Stahl Schaltgeräte GmbH
74638 Waldenburg (DE)**

(72) Erfinder:
• **Mann, Ulrich
74523 Schwäbisch Hall (DE)**
• **Limbacher, Bernd
74523 Schwäbisch Hall (DE)**

(74) Vertreter: **Rüger, Barthelt & Abel
Patentanwälte
Webergasse 3
73728 Esslingen (DE)**

(56) Entgegenhaltungen:
DE-A1-102010 016 782     GB-A- 2 328 508
US-A- 6 112 804     US-B1- 6 202 472

EP 2 842 608 B1

**Beschreibung**

Die Erfindung betrifft ein Verfahren zur Herstellung einer Druckentlastungsvorrichtung für ein explosionsgeschütztes Gehäuse. Das explosionsgeschützte Gehäuse ist vorzugsweise in der Zündschutzart "druckfeste Kapselung" (Ex-d) ausgeführt. Üblicherweise sind in derart explosionsgeschützten Gehäusen elektrische und/oder elektronische Bauteile bzw. Komponenten angeordnet, die Zündquellen für eine außerhalb des Gehäuses vorhandene explosionsgefährdete Atmosphäre darstellen können. Die Druckentlastungsvorrichtung dient in dem explosionsgeschützten Gehäuse dazu, einen Druckausgleich zwischen dem Gehäuseinneren und der Umgebung herzustellen. Sie dient dazu den Druck auf das Gehäuse im Falle einer innerhalb eines Gehäuses stattfindenden Explosion zu begrenzen bzw. zu verringern oder auch Druckunterschiede zur Umgebung beispielsweise durch Temperaturänderungen auszugleichen. Hierfür ist eine gasdurchlässige Verbindung zwischen dem Innenraum des Gehäuses und der Umgebung über die Druckentlastungsvorrichtung hergestellt. Gleichzeitig stellt die Druckentlastungsvorrichtung sicher, dass Flammen, Zündfunken oder dergleichen nicht aus dem Innenraum des Gehäuses nach außen in die explosionsgefährdete Umgebung gelangen können. Das Gehäuse sowie die Druckentlastungsvorrichtung muss daher einem Explosionsdruck standhalten können.

Eine Druckentlastungsvorrichtung ist beispielsweise aus US 4 180 177 A bekannt. Dort wird ein poröser Körper in einen Druckentlastungsdurchgang eingesetzt. Der poröse Körper ist gasdurchlässig. Er wird in Durchströmrichtung zwischen Ringflanschen geklemmt im Druckentlastungsvorgang gehalten.

Eine im Prinzip ähnlich aufgebaute Druckentlastungsvorrichtung ist aus DE 10 2010 016 782 A1 bekannt. Dort ist ein poröser Körper an einer ringförmigen Randzone gefasst und fest eingespannt. Durch das Einspannen kann in dieser Randzone auch ein Porenverschluss erzielt werden. Zum Einfassen des porösen Körpers dient ein hohlzylindrisches Aufnahmeteil, in dem ein Druckentlastungsdurchgang gebildet ist. Dieses hohlzylindrische Aufnahmeteil kann in die Gehäusewand eines explosionsgeschützten Gehäuses eingesetzt und insbesondere eingeschraubt werden.

GB 2 328 508 A beschreibt ein Gehäuse für einen Gasdetektor zur Detektion eines brennbaren Gases. In einer Gehäuseöffnung sitzt ein poröser Körper, der durch ein poröses Sinterteil gebildet ist. Das Sinterteil kann unmittelbar beim Gießen eines Gehäuseteils eingegossen werden. Bei dieser Ausführung hat das Sinterteil an seinem Umfang eine erhöhte Dichte, um das Eindringen von flüssigem Plastikmaterial beim Gießen zu verhindern.

Bei einem aus US 6 202 472 B1 bekannten, als Flammsperre dienenden porösen Körper eines Gassensors ist der Körper mehrlagig ausgeführt. Die einzelnen Gewebelagen können durch Sintern miteinander verbunden werden.

Ausgehend vom Stand der Technik kann es als Aufgabe der vorliegenden Erfindung angesehen werden, eine einfach und kostengünstig herzustellende Druckentlastungsvorrichtung zu schaffen.

Diese Aufgabe wird durch ein Verfahren mit den Merkmalen des Patentanspruches 1 gelöst.

Bei dem erfindungsgemäßen Verfahren wird zunächst ein gasdurchlässiger poröser Körper bereitgestellt. Dieser Körper ist vorzugsweise als Faserstrukturkörper ausgeführt. Er kann unregelmäßig angeordnete und miteinander verschlungene Fasern, vorzugsweise aus Metall und insbesondere aus Edelstahl, aufweisen. Insbesondere bestehen alle Fasern aus demselben Werkstoff.

In Abwandlung zu diesem bevorzugten Ausführungsbeispiel des porösen Körpers kann er auch aus einer oder mehreren unterschiedlichen Lagen aufgebaut sein. Alternativ oder zusätzlich zu einer Lage aus einer Faserstruktur können auch Gelege, Gewebe, Schüttungen oder andere geeignete Strukturen aus Fasern vorgesehen sein.

Es ist auch möglich den porösen Körper aus einem Schaummaterial, aus miteinander durch Sinterung verbundenen Partikeln oder dergleichen herzustellen.

Der poröse Körper wird aus einem porösen Ausgangsmaterial, das beispielsweise eine Bahn oder eine Matte bildet, herausgetrennt. Beispielsweise kann das Heraustrennen des porösen Körpers aus dem Ausgangsmaterial durch Stanzen, Wasserstrahlschneiden, Drahterodieren, Laserschneiden oder Plasmaschneiden erfolgen. Der poröse Körper weist einen Zentralbereich auf, der gasdurchlässig ist. Dieser Zentralbereich ist von einer in Umfangsrichtung geschlossenen Randzone umgeben. Abhängig von der Kontur des porösen Körpers kann die geschlossene Form der Randzone einen kreisförmigen, rechteckigen, polygonalen, gekrümmten oder einen anderen beliebigen Verlauf aufweisen. Diese Randzone enthält die den porösen Körper umschließende Umfangsfläche. Die Umfangsfläche verbindet die beiden Seitenflächen des porösen Körpers, durch die eine Gasströmung in bzw. aus dem porösen Körper ermöglicht ist. In der Randzone ist eine Barriere gegen das Eindringen von flüssigem Gusswerkstoff durch die Umfangsfläche in den Zentralbereich vorhanden. Diese Barriere kann durch die Randzone gebildet sein oder in der Randzone gebildet sein.

Die Festigkeit des porösen Körpers ist in der Randzone größer als im Zentralbereich des porösen Körpers. Die Festigkeit der Randzone wird durch Einwirkung von Kraft und/oder Druck und/oder Wärme und/oder Strahlungsenergie auf die Randzone gegenüber der Festigkeit des Zentralbereichs erhöht.

Diese Festigkeitserhöhung erfolgt während des Heraustrennens und durch das Heraustrennen des porösen Körpers aus einem Ausgangsmaterial. Beispielsweise kann durch die Einwirkung von Energie eine Kaltverfestigung erreicht werden. Durch die relativ hohe Porosität und den Werkstoff des Ausgangsmaterials bzw. des porösen Körpers kommt es beim Heraustrennen, beispielsweise beim Wasserstrahlschneiden, zu einem Fließen und zur Kaltverfestigung des porösen Materials im Schnittbereich. Dadurch wird eine Erhöhung der Festigkeit und/oder eine lokale Verdichtung und/oder eine Verkleinerung der Porengröße oder ein Verschluss der Poren an der Trennfläche und mithin an der Umfangsfläche des porösen Körpers erreicht. Bei anderen Trennverfahren kann diese Verfestigung durch das Einwirken von thermischer Energie auf die Trennfläche und mithin die Umfangsfläche des porösen Körpers erreicht werden. Dabei können die Fasern im Bereich der Umfangsfläche zumindest teilweise schmelzen und sich dadurch stoffschlüssig verbinden, was zu einer erhöhten Festigkeit führt.

Der poröse Körper wird in eine Gussform eingelegt. Anschließend wird flüssiger Gusswerkstoff in die Gussform eingebracht. Dabei wird ein Aufnahmeteil hergestellt. Das Aufnahmeteil kann von einem Druckentlastungsstutzen mit einem Druckentlastungsdurchgang gebildet sein. Vorzugsweise ist das Aufnahmeteil durch eine Gehäusewand bzw. den Abschnitt einer Gehäusewand des explosionsgeschützten Gehäuses gebildet. Das Aufnahmeteil wird bevorzugt aus einem Kunststoff-, Metallmaterial oder einem Verbundmaterial hergestellt. Durch die und während der Herstellung des Aufnahmeteils entsteht gleichzeitig eine form- und/oder stoffschlüssige Verbindung mit der Randzone und insbesondere mit der Umfangsfläche und bei einem Ausführungsbeispiel ausschließlich mit der Umfangsfläche des porösen Körpers. Da in der Randzone eine Barriere vorhanden ist, kann flüssiger Gusswerkstoff nicht unkontrolliert in den porösen Körper eindringen. Der poröse Körper wird von dem Gusswerkstoff umspritzt oder umgossen.

Dieser Gießvorgang kann z.B. durch Druckgießen, Spritzgießen oder Spritzpressen erfolgen. Wegen der dabei auftretenden Kräfte und Drücke innerhalb der Gussform besteht die Gefahr, dass einerseits der Gusswerkstoff unkontrolliert in den porösen Körper eindringt, die Poren verstopft und die Gasdurchlässigkeit insbesondere im Zentralbereich negativ beeinträchtigt und dass es andererseits durch diese auftretenden Kräfte zu Verformungen des porösen Körpers kommt, welche ein prozessbedingtes notwendiges Abdichten des porösen Körpers gegenüber dem Gusswerkstoff ebenfalls negativ beeinträchtigen. Wegen der vorhandenen Barriere in der Randzone ist eine Beeinträchtigung durch unkontrolliertes Eindringen in den porösen Körper vermieden. Außerdem ist bei einer bevorzugten Ausführungsform des porösen Körpers die Festigkeit im Bereich der Umfangsfläche bzw. der Randzone erhöht. Die Randzone verleiht somit dem porösen Körper eine zusätzliche mechanische Festigkeit. Die Verformung des porösen Körpers während des Gießprozesses durch prozessbedingte hohe Drücke oder Kräfte ist dadurch vermieden.

Zur Aufrechterhaltung der Druckfestigkeit des Gehäuses muss im Falle einer Explosion ein vorgegebener Volumenstrom den porösen Körper im Zentralbereich durchdringen können. Nur dann ist sichergestellt, dass der Explosionsdruck das explosionsgeschützte Gehäuse nicht beschädigt und Flammen oder Zündfunken in die explosionsgefährdete Umgebung austreten können. Dies wird durch die Barriere in der Randzone gewährleistet.

Vorzugsweise wird beim Gießprozess des Aufnahmeteils sichergestellt, dass Gusswerkstoff ausschließlich mit der Umfangsfläche bzw. der Randzone des porösen Körpers in Kontakt gelangen kann, so dass die Barriere wirksam das Eindringen von Gusswerkstoff in den Zentralbereich verhindert. Beispielsweise können die beiden Seitenflächen von der Gussform verschlossen bzw. abgedeckt werden.

Bei einem bevorzugten Ausführungsbeispiel wird die Gussform mit Hilfe eines Temperiermittels temperiert. Vorzugsweise wirkt das Temperiermittel ausschließlich auf einen Abschnitt der Gussform ein, der unmittelbar an den porösen Körper angrenzt. Auf diese Weise kann der poröse Körper gezielt temperiert werden. Das Temperiermittel kann den porösen Körper kühlen und/oder erwärmen. Über die Gussform kann somit der poröse Körper mittelbar temperiert werden. Dadurch kann der Erstarrungsprozess des Gusswerkstoffes beim Kontakt mit den porösen Körper beeinflusst werden. Insbesondere kann durch die Temperierung mit Hilfe des Temperiermittels die Eindringtiefe des Gusswerkstoffes in den porösen Körper beeinflusst werden. Wird der poröse Körper beispielsweise gekühlt, kann der Erstarrungsprozess des Gusswerkstoffes beim Kontakt mit dem porösen Körper beschleunigt und die Eindringtiefe dadurch verringert werden. Dieser Aspekt des Verfahrens kann auch unabhängig von der Bildung der Barriere am porösen Körper verwirklicht werden.

Vorzugsweise weist der Zentralbereich eine im Wesentlichen konstante Porosität und/oder Porengröße auf. Weiter vorzugsweise ist die Porosität und/oder die Porengröße in der Randzone kleiner als im Zentralbereich. Dadurch kann durch die verringerte Porosität bzw. Porengröße in der Randzone eine Barriere gegen das Eindringen von Gusswerkstoff in den Zentralbereich gebildet werden.

Bei einem bevorzugten Ausführungsbeispiel wird die Porosität und/oder die Porengröße in der Randzone während und insbesondere durch das Heraustrennen des porösen Körpers aus einem porösen Ausgangsmaterial verringert. Allgemeiner gesagt wird die Barriere während und insbesondere durch das Heraustrennen des porösen Körpers aus dem Ausgangsmaterial erzeugt. Bei diesem Heraustrennen kann durch Einwirkung eines Trennmittels oder Trennwerkzeugs Druck- und/oder Wärme erzeugt und dadurch ein lokales Aufschmelzen bzw. ein lokales Fließen des porösen Ausgangsmaterials an der Schnitt- oder Trennfläche hervorgerufen werden. Dies führt dazu, dass die entlang der Schnitt- oder Trennfläche verlaufende Umfangsfläche des porösen Körpers eine verringerte Porosität bzw. eine verringerte Porengröße aufweist und dadurch die Barriere in der Randzone gebildet wird. Dadurch kann ein nachfolgender Prozessschritt zur Bearbeitung des porösen Körpers entfallen. Die Barriere wird bereits während und insbesondere durch das Heraustrennen des porösen Körpers aus dem Ausgangsmaterial erzeugt.

Vorzugsweise wird die Barriere durch Einwirkung von Druck- und/oder Wärme und/oder Strahlungsenergie auf die Randzone hergestellt, wobei insbesondere die Porosität und/oder die Porengröße in der Randzone verringert wird. Dabei kann beispielsweise das Material des porösen Körpers in der Randzone lokal schmelzen und zumindest einen Teil der Poren verkleinern und/oder verschließen.

Die Barriere bzw. die Randzone kann bei einem Ausführungsbeispiel auch durch ein separates Ringteil gebildet sein, das den gasdurchlässigen porösen Zentralbereich umschließt. Ein solches Ringteil kann stoffschlüssig mit dem porösen Zentralbereich verbunden werden. Das Ringteil kann aus Kunststoff, Metall oder einem Verbundwerkstoff gebildet sein. Das Ringteil muss nicht vollständig gasdicht ausgeführt sein. Es reicht aus, dass durch das Ringteil eine Randzone mit einer Barriere gegen das Eindringen von Gusswerkstoff und/oder einer erhöhten mechanische Festigkeit gebildet ist. Hiefür muss die Porosität und/oder die Porengröße ausreichend klein sein. Das Ringteil kann daher auch durch eine Gitterstruktur oder dergleichen gebildet sein, die diese Vorgaben erfüllt.

Die Porosität des porösen Körpers im Zentralbereich beträgt mindestens 60% und maximal 80%. Die Porosität des porösen Körpers lässt sich beispielsweise wie folgt berechnen:

$$\Phi = (1 - \frac{\rho}{\rho_0}) \cdot 100\% \ ,$$

mit

     $\Phi$: Porosität in Prozent
     $\rho$: Rohdiche des Körpers
     $\rho_0$: Reindichte des Körpers

Bei einem bevorzugten Ausführungsbeispiel beträgt die Porengröße des porösen Körpers im Zentralbereich mindestens 80 Mikrometer und maximal 250 Mikrometer in zumindest einer und insbesondere in mehreren oder allen Raumrichtungen.

Bei einer Ausführungsform beträgt die Porosität und/oder die Porengröße in der Randzone maximal 80% oder maximal 50% oder maximal 30% der Porosität und/oder der Porengröße im Zentralbereich.

Ist die Porosität und/oder die Porengröße im Zentralbereich ausreichen klein, kann der poröse Körper sowohl im Zentralbereich, als auch in der Randzone eine einheitliche Porosität und/oder Porengröße aufweisen.

Es ist bei einem Ausführungsbeispiel auch möglich, dass die Poren des porösen Köpers in der Randzone vollständig geschlossen sind. Unter vollständig geschlossenen Poren ist hier zu verstehen, dass beim Umspritzen bzw. Umgießen des porösen Körpers während der Herstellung des Aufnahmeteils bei den verwendeten Betriebsparametern während des Gießens kein Gusswerkstoff durch die Umfangsfläche bzw. durch die Randzone hindurch treten kann.

Bei einem bevorzugten Ausführungsbeispiel hat die Randzone eine maximale Tiefe in einem Bereich von 0,5 bis 10 mm. Die Tiefe der Randzone wird in einer Richtung parallel zum Normalenvektor an der jeweiligen betrachteten Stelle der Umfangsfläche bestimmt. Bei einer kreisringförmigen Umfangsfläche wird die Tiefe somit beispielsweise in Radialrichtung gemessen.

Vorzugsweise besteht der poröse Körper aus miteinander verschlungenen ungeordneten Fasern. Die Fasern können einen runden, unregelmäßigen oder anders gearteten Querschnitt haben. Sie haben bevorzugt einen Durchmesser, der im Bereich vom mindestens 70 Mikrometern und maximal 130 Mikrometern liegt. Bei den hier beschriebenen bevorzugten Ausführungsformen haben alle Fasern des porösen Körpers einen Durchmesser im angegebenen Bereich.

Die Dicke des porösen Körpers in Durchströmrichtung beträgt vorzugsweise zumindest 5 bis 10 mm.

Der poröse Körper besteht bei einem bevorzugten Ausführungsbeispiel aus einem Material, das dauerhaft Temperaturen von mindestens 400°C standhält. Vorzugsweise ist der poröse Körper aus Metall und insbesondere aus chromlegiertem Stahl hergestellt.

Bei einer Ausführungsform ist der poröse Körper aus miteinander verschlungenen ungeordneten Fasern gebildet, die zumindest in der Randzone eine Beschichtung aufweisen. Durch diese Beschichtung kann in Verbindung mit einer vorgegebenen Porengröße und/oder einer vorgegebenen Porosität in der Randzone eine Barriere gegen das Eindringen des Gusswerkstoffes gebildet werden.

Vorteilhafte Ausgestaltungen der Erfindung ergeben sich aus den abhängigen Patentansprüchen sowie der Beschreibung. Die Beschreibung beschränkt sich auf wesentliche Merkmale der Erfindung. Die Zeichnung ist ergänzend heranzuziehen. Nachfolgend werden anhand der Zeichnung vorteilhafte Ausführungsformen der Erfindung im Einzelnen erläutert. Es zeigen:

     Figuren 1 bis 3 jeweils eine schematische perspektivische Darstellung eines Ausführungsbeispiels eines porösen Körpers, wobei Figur 2 ein Beispiel ist, und nicht unter die beanspruchte Erfindung fällt,
     Figuren 4 bis 7a und 7b schematisch ein Ausführungsbeispiel für einen Verfahrensablauf zur Herstellung einer Druckentlastungsvorrichtung mit einem porösen Körper,
     Figur 8 eine schematische perspektivische Darstellung eines explosionsgeschützten Gehäuses mit einer Druckentlastungsvorrichtung und

Figur 9 eine sehr stark schematisierte Prinzipskizze zur Veranschaulichung der Porosität bzw. der Porengröße des porösen Körpers in einem Zentralbereich und einer Randzone.

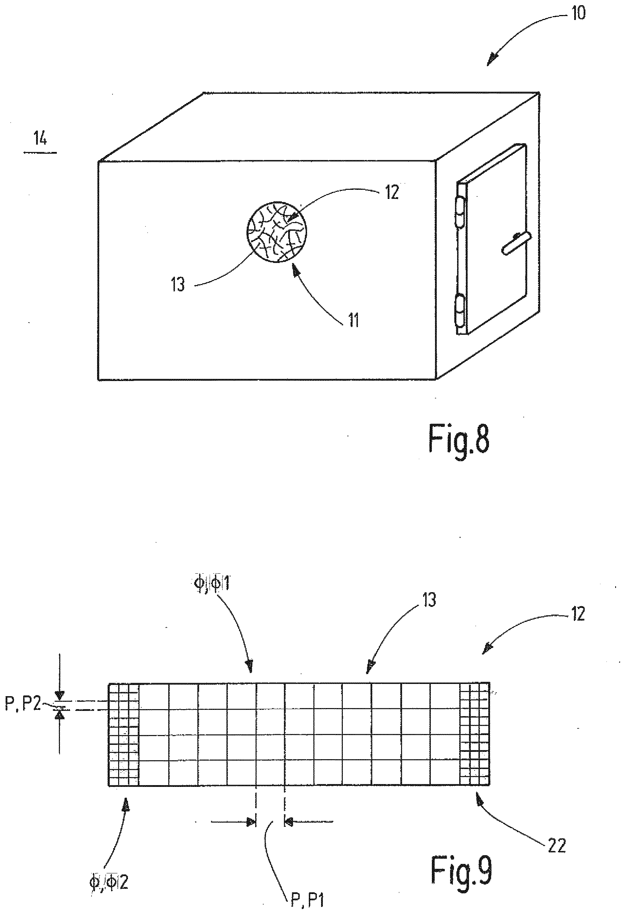

In Figur 8 ist lediglich schematisch ein explosionsgeschütztes Gehäuse 10 mit einer Druckentlastungsvorrichtung 11 veranschaulicht. Die Druckentlastungsvorrichtung 11 weist beispielsgemäß einen porösen Körper 12 auf. Der poröse Körper 12 hat einen gasdurchlässigen porösen Zentralbereich 13, der einen Gasaustausch zwischen dem Innenraum des explosionsgeschützten Gehäuses 10 und der Umgebung 14 ermöglicht. Im Inneren des Gehäuses 10 sind nicht dargestellte elektrische und/oder elektronische Bauteile bzw. Komponenten angeordnet. Diese Komponenten können durch Entwicklung von Wärme oder Zündfunken als Zündquellen für eine explosionsgefährdete Atmosphäre in der Umgebung 14 darstellen.

Das explosionsgeschützte Gehäuse 10 ist beispielsgemäß in der Zündschutzart "druckfeste Kapselung" (Ex-d) ausgeführt. Das Gehäuse 10 ist so ausgeführt, dass es auch im Falle einer Explosion innerhalb des Gehäuses 10 keine Flammen oder Zündfunken in die Umgebung 14 entlässt. Das Gehäuse 10 hält dem Explosionsdruck stand. Um dies zu erreichen, ist die Druckentlastungsvorrichtung 11 vorhanden. Damit ist ein Gasaustausch zwischen dem Inneren des Gehäuses und der Umgebung 14 möglich, so dass der Explosionsdruck im Gehäuse 10 begrenzt wird. Allerdings muss die Druckentlastungsvorrichtung 11 dabei derart ausgeführt sein, dass keine Flammen oder Zündfunken in die Umgebung 14 gelangen können und ein ausreichender Gasvolumenstrom durch die Druckentlastungsvorrichtung 11 erreicht wird.

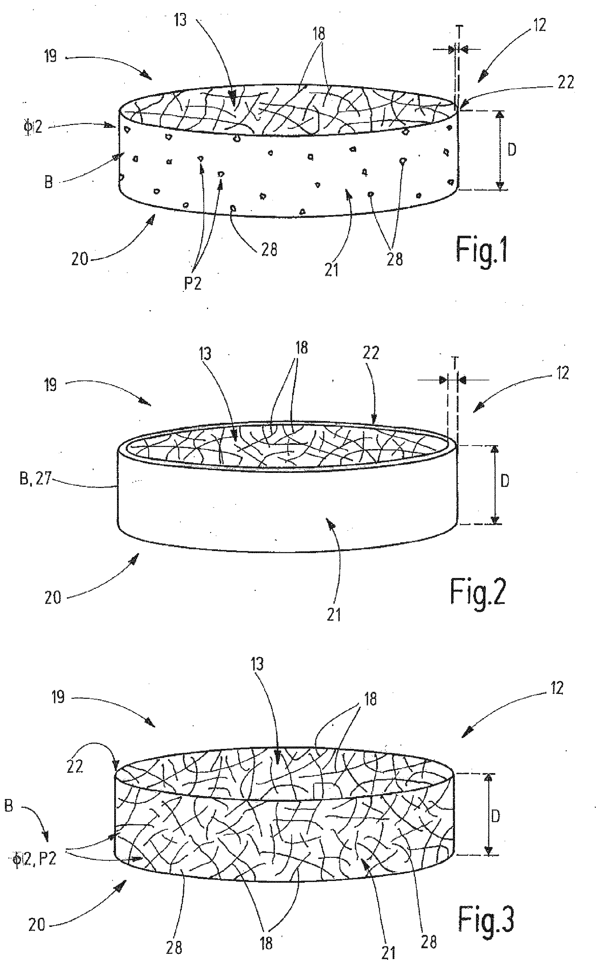

Bei den hier beschriebenen Ausführungsformen weist die Druckentlastungsvorrichtung 11 einen porösen Körper 12 auf. Verschiedene Ausführungsformen des porösen Körpers 12 sind in den Figuren 1 bis 3 schematisch veranschaulicht. Der poröse Körper 12 ist beispielsgemäß als Faserstrukturteil ausgeführt. Er weist ein Wirrfasergelege auf (Figuren 1 bis 3) bzw. besteht aus einem Wirrfasergelege (Figuren 1 und 3), dessen Fasern 18 ungeordnet und miteinander verschlungen sind. Die Fasern 18 sind vorzugsweise Metallfasern. Die Fasern 18 halten beispielsgemäß einer Umgebungstemperatur von 400°C oder mehr stand. Die Fasern 18 können aus legiertem Stahl, insbesondere chromlegiertem Stahl bzw. Edelstahl bestehen. Die Länge der Fasern 18 kann variieren. Beispielsweise sind die Fasern zumindest einige Millimeter bis zu mehrere Zentimeter lang. Der Durchmesser der Fasern beträgt zumindest 70 Mikrometer und maximal 130 Mikrometer. Beispielsgemäß bestehen alle Fasern 18 aus demselben Material und haben denselben Durchmesser.

Der poröse Körper 12 hat vorzugsweise die Gestalt einer Scheibe und ist beispielsgemäß durch zwei gegenüberliegende Seitenflächen 19, 20 begrenzt. Durch die Seitenflächen 19, 20 kann Gas in den porösen Körper 12 einströmen bzw. herausströmen. Die Dicke D des porösen Körpers 12 zwischen den beiden Seitenflächen 19, 20 beträgt zumindest 5 bis 10 mm.

Die beiden Seitenflächen 19, 20 des porösen Körpers 12 sind über eine ringsumlaufende Umfangsfläche 21 miteinander verbunden. Die Umfangsfläche 21 hat bei den hier dargestellten Ausführungsbeispielen eine kreisringförmige Gestalt. Abhängig von der Kontur des porösen Körpers 12 in Draufsicht auf eine der Seitenflächen 19, 20 kann die Umfangsfläche 21 auch eine beliebige andere Form aufweisen, beispielsweise eine rechteckige oder polygonale Form, wobei die Abschnitte zwischen Ecken geradlinig oder gekrümmt verlaufen können.

Der poröse Körper 12 weist einen Zentralbereich 13 und eine den Zentralbereich 13 umschließende Randzone 22 auf. Die Randzone 22 enthält die Umfangsfläche 21 und erstreckt sich ausgehend von der Umfangsfläche 21 mit einer Tiefe T in den porösen Körper 12. Die Tiefe T wird dabei rechtwinklig zu einer jeweiligen Stelle auf der Umfangsrichtung 21 gemessen. Bei dem beispielsgemäß kreisscheibenförmigen porösen Körper 12 wird die Tiefe T der Randzone 22 daher in Radialrichtung rechtwinklig zur Umfangsfläche 21 bestimmt. Die Tiefe T beträgt vorzugsweise höchstens 0,5 bis 10 mm. Die Randzone 22 kann - wie beim Ausführungsbeispiel gemäß Figur 3 - auch nahezu ohne Erstreckung in Tiefenrichtung ausgeführt sein und sich quasi auf die Ebene der Umfangsfläche 21 beschränken. Mit anderen Worten kann die Tiefe T der Randzone 22 beliebig klein sein.

Die Randzone 22 erstreckt sich entlang der Umfangsfläche 21 vollständig um den Zentralbereich 13 herum und ist daher in Verlaufsrichtung der Umfangsfläche 21 vollständig geschlossen.

Die Randzone 22 enthält oder bildet eine Barriere B gegen das Eindringen eines fließfähigen bzw. flüssigen Gusswerkstoffes G aus dem ein Aufnahmeteil 25 zur Aufnahme des porösen Körpers 12 in einem Gießprozess, beispielsweise Spritzgießen, Spritzpressen oder Druckgießen, hergestellt wird. Das Aufnahmeteil 25 der Druckentlastungsvorrichtung 11 hat einen Druckentlastungsdurchgang 26, durch den Gas aus dem Inneren des Gehäuses 10 in die Umgebung 14 strömen kann. Der Druckentlastungsdurchgang 26 ist in seinem Querschnitt an die Kontur des porösen Körpers 12 angepasst und beim Ausführungsbeispiel daher zumindest abschnittweise zylindrisch. Der poröse Körper 12 wird in den Druckentlastungsdurchgang 26 eingesetzt, so dass das Austreten von Zündfunken oder Flammen aus dem Inneren des Gehäuses durch den Druckentlastungsdurchgang 26 in die Umgebung 14 verhindert ist.

Die Barriere B gegen das Eindringen des Gusswerkstoffes G kann beispielweise aber nicht gemäß der Erfindung durch ein Ringteil 27 gebildet sein, das in der Randzone 22 des porösen Körpers 12 angeordnet ist bzw. diese Randzone 22 bildet (Figur 2). Das Ringteil 27 kann aus Edelstahl hergestellt sein und bildet vorzugsweise eine vollständig geschlossene Umfangsfläche 21. Durch das Ringteil 27 ist sichergestellt, dass die Umfangsfläche 21 gegen das Eindringen eines Gusswerkstoffs G abgedichtet ist. Es ist somit eine Barriere B vorhanden, die das Eindringen von Gusswerkstoff G durch die Umfangsfläche 21 in den Zentralbereich 13 verhindert.

Bei anderen Ausführungsbeispielen gemäß der Figuren 1 und 3 kann ein solches Ringteil 27 entfallen. In der Randzone 22 ist die Porosität Φ und/oder die Porengröße P so vorgegeben bzw. durch eine Behandlung des porösen Körpers 12 verändert, dass ein Eindringen von Gusswerkstoff G durch die Umfangsfläche 21 in den Zentralbereich 13 vermieden ist. Das Eindringen von Gusswerkstoff G durch die Umfangsfläche 21 in die Randzone 22 kann möglich sein. Allerdings wird durch die Barriere B verhindert, dass unkontrolliert Gusswerkstoff G in den porösen Körper 12 und vor allem in den Zentralbereich 13 eindringt und dort den Durchströmungswiderstand erhöht. Dadurch kann anhand der Größe des Zentralbereichs 13 ein gewünschter Volumenstrom durch den porösen Körper 12 und damit durch die Druckentlastungsvorrichtung 11 im Falle einer Explosion im Inneren des Gehäuses 10 sichergestellt werden.

In Figur 9 ist stark schematisiert die Porengröße P bzw. die Porosität Φ veranschaulicht. Der Zentralbereich 13 weist eine Porosität Φ1 und eine Porengröße P1 auf. In der Randzone 22 ist die Porengröße P2 kleiner als die Porengröße P1 im Zentralbereich. Alternativ oder zusätzlich ist die Porosität Φ2 in der Randzone 22 kleiner als die Porosität Φ1 im Zentralbereich 13. Dadurch ist erreicht, dass im Zentralbereich 13 ein ausreichend großer Volumenstrom des Gases im Falle einer Explosion durch den porösen Körper 12 hindurch treten kann. Gleichzeitig wird verhindert, dass beim Herstellen des Aufnahmeteils 25 durch Umgießen oder Umspritzen des porösen Körpers 12 Gusswerkstoff G durch die Umfangsfläche 21 und die Randzone 22 in den Zentralbereich 13 eindringt.

Die Porengröße des porösen Körpers im Zentralbereich beträgt beispielsgemäß mindestens 80 Mikrometer und maximal 250 Mikrometer in zumindest einer und insbesondere in mehreren oder allen Raumrichtungen. Die Porosität Φ1 im Zentralbereich 13 beträgt beispielsgemäß mindestens 60% und maximal 80%. Die Porosität wird dabei wie folgt ermittelt:

$$\Phi = (1 - \frac{\rho}{\rho_0}) \cdot 100\% \ ,$$

mit

Φ: Porosität in Prozent
ρ: Rohdiche des Körpers
$\rho_0$: Reindichte des Körpers

Die Porosität Φ2 und/oder die Porengröße P2 in der Randzone 22 ist beispielsweise um 50% bis 70% kleiner als die Porosität Φ1 und/oder die Porengröße P1 im Zentralbereich 13 (Figur 1). Bei einem anderen Ausführungsbeispiel (Figur 3) kann die Porosität Φ und/oder die Porengröße P innerhalb des gesamten porösen Körpers 12 konstant sein, sofern die Porosität Φ und/oder die Porengröße P ausreichend klein sind, um das Eindringen von Gusswerkstoff G durch die Umfangsfläche 21 und die Randzone 22 in den Zentralbereich 13 zu verhindern.

Bei einem bevorzugten Verfahren zur Herstellung der Druckentlastungsvorrichtung 11 wird die Porosität Φ und/oder die Porengröße P in der Randzone 22 durch Einwirkung von Druck und/oder Wärme und/oder Strahlungsenergie verringert. Dabei können die Poren 28 in der Randzone 22 oder an der Umfangsfläche 21 auch vollständig geschlossen werden.

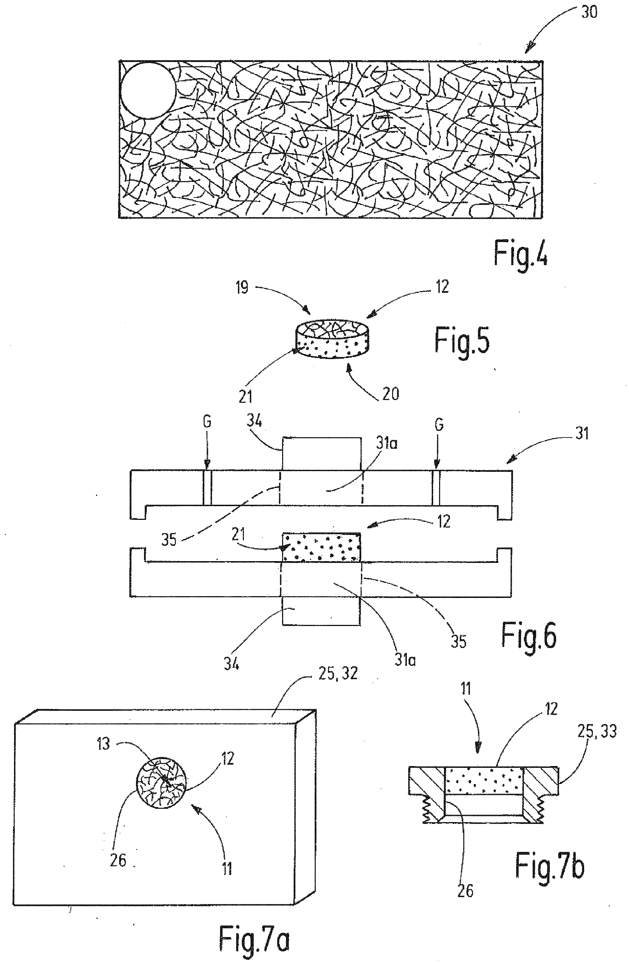

Ein bevorzugtes Verfahren zur Herstellung der Druckentlastungsvorrichtung 11 wird nachfolgend anhand der Figuren 4 bis 7a und 7b erläutert:

Beispielsgemäß wird zunächst ein poröses Ausgangsmaterial 30 bereitgestellt, dessen Dicke der Dicke D des porösen Körpers 12 entspricht. Das Ausgangsmaterialteil 30 kann wie in Figur 4 veranschaulicht in Form einer Bahn oder Matte bereitgestellt werden.

Der poröse Körper 12 wird aus dem Ausgangsmaterial 30 herausgetrennt und beispielsgemäß herausgeschnitten. Das Ausschneiden des porösen Körpers 12 kann durch Drahterodieren, Wasserstrahlschneiden, Plasmaschneiden, Laserschneiden oder dergleichen erfolgen. Vorzugsweise wird beim Ausschneiden des porösen Körpers 12 aus dem Ausgangsmaterialteil 30, insbesondere beim Laserschneiden, ausreichend Energie, vorzugsweise Wärme, in die Schnittfläche eingebracht, die beim porösen Körper 12 die Umfangsfläche 21 bildet. Dabei schmelzen das Material und beispielsgemäß die Fasern 18 im Bereich der Umfangsfläche 21 lokal, wodurch sich die Porosität Φ2 und/oder die Porengröße P2 an der Umfangsfläche 21 verringert. Die Poren 28 können auch vollständig verschlossen werden. Die Verringerung der Porosität Φ2 und der Porengröße P2 im Bereich der Umfangsfläche 21 ist schematisch in den Figuren 1 und 5 veranschaulicht. Die verringerte Porosität Φ2 und Porengröße P2 an der Umfangsfläche 21 bildet die Barriere B gegen das Eindringen von Gusswerkstoff G.

Somit wird durch das Heraustrennen des porösen Körpers 12 aus dem Ausgangsmaterialteil 30 ohne einen zusätzlichen anschließenden Verfahrensschritt die Barriere B an der Umfangsfläche 21 erzeugt.

Anschließend wird der herausgetrennte poröse Körper 12 (Figur 5) in eine Gussform 31 eingelegt (Figur 6). Die Gussform 31 wird anschließend geschlossen. Dabei werden die Seitenflächen 19, 20 und zumindest der Zentralbereich 13 abgedeckt, so dass flüssiger Gusswerkstoff G nicht in Kontakt mit dem Zentralbereich 13 bzw. den Seitenflächen 19, 20 kommt. Nach dem Schließen der Gussform 31 wird Gusswerkstoff G durch Einlasskanäle in den Innenraum der Gussform 31 gespritzt oder gepresst. Dabei entsteht ein hoher Druck bzw. eine hohe Kraft auf den porösen Körper 12. Durch die Barriere B wird jedoch das Eindringen von Gusswerkstoff G durch die Randzone 22 hindurch in den Zentralbereich 13 verhindert. Der poröse Körper 12 wird durch das Herstellen des Aufnahmeteils 25 in der Gussform 31 gleichzeitig form- und/oder stoffschlüssig mit dem Aufnahmeteil 25 verbunden.

Bei einer optionalen, bevorzugten Ausführungsform kann an der Gussform 31 ein Temperiermittel 34 vorhanden sein. Über dieses Temperiermittel 34 kann die Gussform 31 und beispielsgemäß ein Abschnitt 31a der Gussform 31 temperiert werden. Beispielsweise kann der Abschnitt 31a über das Temperiermittel 34 gegenüber der übrigen Gussform 31 erwärmt und/oder gekühlt werden. Erforderlichenfalls kann der Abschnitt 31a gegenüber den angrenzenden Abschnitten der Gussform 31 durch ein Isolationsmittel 35 geeignet isoliert werden, was in Figur 6 stark schematisiert dargestellt ist.

Mit Hilfe des Temperiermittels 34 kann über den Abschnitt 31a die Temperatur des porösen Körpers 12 in der Gussform 31 beeinflusst werden. Dadurch ist es möglich, die Eindringtiefe des Gusswerkstoffes G zu beeinflussen bzw. zu steuern. Beispielsweise kann der poröse Körper 12 über das Temperiermittel 34 gekühlt werden, so dass der Gusswerkstoff G beim Kontakt mit dem porösen Körper 12 schneller erstarrt und weniger tief in die Randzone 22 eindringt.

Es ist auch möglich, vor und/oder während und/oder nach dem Einfüllen des Gusswerkstoffes G in die Gussform 31 ein vorgegebenes Temperaturprofil über das Temperiermittel 34 einzustellen um die Verbindung des Gusswerkstoffes G mit dem porösen Körper 12 sicherzustellen und andererseits dabei die Eindringtiefe zu steuern bzw. zu beeinflussen. Wie in Figur 6 schematisch veranschaulicht, wirkt das Temperiermittel 34 vorzugsweise ausschließlich auf den Abschnitt 31a der Gussform 31 ein. Alternativ hierzu könnten auch andere Abschnitte der Gussform 31 vorzugsweise unabhängig von dem Abschnitt 31a temperiert, also gekühlt und/oder erwärmt werden.

Alternativ kann der poröse Körper 12 auch direkt vor dem Einlegen in die Gussform 31 gezielt temperiert werden. Durch die so definierte Temperatur des porösen Körpers 12 während des Gießprozesses wird die Eindringtiefe des Gusswerkstoffs G festgelegt.

Als Aufnahmeteil 25 kann gemäß Figur 7a eine Gehäusewand 32 bzw. ein Gehäusewandabschnitt des Gehäuses 10 dienen. Alternativ hierzu kann gemäß Figur 7b als Aufnahmeteil 25 ein Druckentlastungsstutzen 33 dienen. In beiden Fällen weist das Aufnahmeteil 25 einen zumindest abschnittsweise an die Umfangskontur des porösen Körpers 12 angepassten Druckentlastungsdurchgang 26 auf, in dem der poröse Körper 12 sitzt und über den die Umfangsfläche 21 bzw. die Randzone 22 form- und/oder stoffschlüssig mit dem Aufnahmeteil 25 verbunden ist.

Durch das Umspritzen oder Umgießen des porösen Körpers 12 mit dem Gusswerkstoff G bei der Herstellung des Aufnahmeteils 25 wird eine einfache Herstellung der Druckentlastungsvorrichtung 11 erreicht. Es hat sich gezeigt, dass entlang der Umfangsfläche 21 bzw. der Randzone 22 eine ausreichend feste form- bzw. stoffschlüssige Verbindung zwischen dem Aufnahmeteil 25 und dem porösen Körper 12 ohne Bildung von Zündspalten erreicht werden kann. Durch die in der Randzone 22 vorhandene oder durch die Randzone 22 gebildete Barriere B wird außerdem verhindert, dass unkontrolliert Gusswerkstoff G in den porösen Körper 12 eindringt und die Gasdurchlässigkeit negativ beeinträchtigt.

Wie bereits erläutert, kann insbesondere bei der Porosität bzw. Porengröße des Ausgangsmaterialteils 30 gemäß dem bevorzugten Ausführungsbeispiel eine weitere Verringerung der Porosität bzw. der Porengröße in der Randzone 22 entfallen. Die Porosität bzw. die Poren 28 in der Randzone 22 ist bzw. sind dann in Bezug auf das umgießende Medium und den gewählten Verarbeitungsparametern bereits ausreichend klein, so dass ein Durchdringen der Randzone 22 und ein Eindringen in die Randzone 13 des Gusswerkstoffes G beim Gießen des Aufnahmeteils 25 verhindert ist, so dass dadurch die Barriere B gebildet ist.

Die Erfindung betrifft ein Verfahren zur Herstellung einer Druckentlastungsvorrichtung 11 für ein explosionsgeschütztes Gehäuse 10. Die Druckentlastungsvorrichtung 11 weist einen porösen Körper 12 mit einem gasdurchlässigen porösen Zentralbereich 13 und einer diesen Zentralbereich 13 ringförmig umschließenden Randzone 22 auf. Eine Umfangsfläche 21 des porösen Körpers 12 ist in der Randzone 22 angeordnet. Die Porosität und/oder die Porengröße ist an der Umfangsfläche 21 bzw. der Randzone 22 derart vorgegeben oder verändert, dass über die Umfangsfläche 21 bzw. die Randzone 22 das Eindringen von flüssigem Gusswerkstoff G in den Zentralbereich 13 des porösen Körpers 12 verhindert ist. Die Randzone 22 bildet somit eine Barriere B für den Gusswerkstoff G. Wegen dieser Barriere B kann der poröse Körper 12 in eine Gussform 31 eingelegt und mit Gusswerkstoff G bei der Herstellung eines Aufnahmeteils 25 umgossen bzw. umspritzt werden. Somit entsteht gleichzeitig mit der Herstellung des Aufnahmeteils 25 eine form- bzw. stoffschlüssige Verbindung zwischen dem Aufnahmeteil 25 und dem porösen Körper 12. Dadurch kann die Druckentlastungsvorrichtung 11 mit dem porösen Körper 12 unmittelbar in eine Gehäusewand 32 oder einen Druckentlastungsstutzen 33 integriert werden.

Bezugszeichenliste:

10 explosionsgeschütztes Gehäuse
11 Druckentlastungsvorrichtung
12 poröser Körper
13 Zentralbereich
14 Umgebung

18 Faser
19 Seitenfläche
20 Seitenfläche
21 Umfangsfläche
22 Randzone

25 Aufnahmeteil
26 Druckentlastungsdurchgang
27 Ringteil
28 Pore

30 Ausgangsmaterialteil
31 Gussform
31a Abschnitt der Gussform
32 Gehäusewand
33 Druckentlastungsstutzen
34 Temperiermittel
35 Isoliermittel

$\Phi$ Porosität
$\Phi 1$ Porosität im Zentralbereichs
$\Phi_2$ Porosität in der Randzone
B Barriere
G Gusswerkstoff
P Porengröße
P1 Porengröße im Zentralbereich
P2 Porengröße in der Randzone

**Patentansprüche**

1. Verfahren zur Herstellung einer Druckentlastungsvorrichtung (11) für ein explosionsgeschütztes Gehäuse (10), mit folgenden Schritten:

   - Bereitstellen eines gasdurchlässigen porösen Körpers (12) durch Heraustrennen aus einem porösen Ausgangsmaterial (30),
   - Erzeugen einer Randzone (22) an dem porösen Körper (12), die eine einen Zentralbereich (13) des porösen Körpers (12) umschließende Umfangsfläche (21) aufweist, wobei die Randzone (22) eine Barriere (B) gegen das Eindringen von flüssigem Gusswerkstoff (G) durch die Umfangsfläche (21) in den Zentralbereich (13) bildet oder aufweist, wobei die Festigkeit in der Randzone (22) höher ist als im Zentralbereich (13) und wobei die Festigkeit der Randzone (22) durch Einwirkung von Kraft und/oder Druck und/oder Wärme und/oder Strahlungsenergie auf die Randzone (22) gegenüber der Festigkeit des Zentralbereichs (13) während des Heraustrennens und durch das Heraustrennen des porösen Körpers (12) aus einem Ausgangsmaterial (30) erhöht wird,
   - Einlegen des porösen Körpers (12) in eine Gussform (31),
   - Einbringen von flüssigem Gusswerkstoff (G) in die Gussform zur Herstellung eines Aufnahmeteils (25) der Druckentlastungsvorrichtung (11) sowie zur Herstellung einer form- und/oder stoffschlüssigen Verbindung zwischen der Umfangsfläche (21) des porösen Körpers (12) und dem Aufnahmeteil (25) derart, dass der poröse Körper (12) in einem Druckentlastungsdurchgang (26) des Aufnahmeteils (25) angeordnet ist.

2. Verfahren nach Anspruch 1,
   **dadurch gekennzeichnet, dass** die Randzone (22) eine geringere Porosität ($\Phi$) und/oder eine geringere Porengröße (P) aufweist als der Zentralbereich (13).

3. Verfahren nach Anspruch 2,
   **dadurch gekennzeichnet, dass** die Porosität ($\Phi 2$) und/oder die Porengröße (P2) in der Randzone (22) während des Heraustrennens des porösen Körpers (12) aus dem porösen Ausgangsmaterialteil (30) verringert wird.

4. Verfahren nach Anspruch 3,
   **dadurch gekennzeichnet, dass** die Porosität ($\Phi 2$) und/oder die Porengröße (P2) in der Randzone (22) durch lokales Aufschmelzen und/oder lokales Fließen des Materials des porösen Körpers (12) verringert wird.

5. Verfahren nach Anspruch 3 oder 4,
   **dadurch gekennzeichnet, dass** die Porosität ($\Phi 2$) und/oder die Porengröße (P2) in der Randzone (22) durch Einwirkung von Kraft und/oder Druck und/oder Wärme und/oder Strahlungsenergie verringert wird.

6. Verfahren nach Anspruche 1 oder 2,
   **dadurch gekennzeichnet, dass** der poröse Körper (12) in der Randzone (22) ein den Zentralbereich (13) umschließendes Ringteil (27) aus einer vom Zentralbereich (13) verschiedenen Materialstruktur aufweist.

7. Verfahren nach einem der vorhergehenden Ansprüche,
   **dadurch gekennzeichnet, dass** zumindest ein Abschnitt (31a) der Gussform (31) vor und/oder nach dem Einfüllen des Gusswerkstoffs (G) durch ein Temperiermittel (34) temperiert wird.

8. Verfahren nach Anspruch 7,
   **dadurch gekennzeichnet, dass** der Abschnitt der Gussform (31), der an den porösen Körper (12) angrenzt, über das Temperiermittel (34) temperiert wird.

9. Verfahren nach einem der vorhergehenden Ansprüche,
   **dadurch gekennzeichnet, dass** die Poren des porösen Körpers (12) in der Randzone (22) vollständig geschlossen werden.

10. Verfahren nach einem der vorhergehenden Ansprüche,
    **dadurch gekennzeichnet, dass** die Randzone (22) eine maximale Tiefe (T) von 0,5 bis 10 Millimetern rechtwinklig zu Umfangsfläche (21) aufweist.

11. Verfahren nach einem der vorhergehenden Ansprüche,
    **dadurch gekennzeichnet, dass** die Porosität ($\Phi 1$) des porösen Körpers (12) im Zentralbereich (13) mindestens 60% und maximal 80% beträgt.

12. Verfahren nach einem der vorhergehenden Ansprüche,
    **dadurch gekennzeichnet, dass** die Porengröße (P1) des porösen Körpers (12) im Zentralbereich (13) mindestens 80 Mikrometer und maximal 250 Mikrometer beträgt.

13. Verfahren nach einem der vorhergehenden Ansprüche,
    **dadurch gekennzeichnet, dass** der poröse Körper (12) aus Fasern (18) gebildet ist, die einen Durchmesser von mindestens 70 Mikrometern und maximal 130 Mikrometern aufweisen.

14. Verfahren nach einem der vorhergehenden Ansprüche,
    **dadurch gekennzeichnet, dass** der poröse Körper (12) aus Edelstahl hergestellt ist.

**Claims**

1. Method for the production of a pressure release device (11) for a housing (10) with flameproof encapsulation, with the following steps:

   - provision of a gas-permeable porous body (12) by cutting out from a porous starting material (30),
   - production of an edge zone (22) on the porous body (12) with a peripheral face (21) surrounding a central region (13) of the porous body (12), wherein the edge zone (22) forms or comprises a barrier (B) against the penetration of liquid casting material (G) through the peripheral face (21) into the central region (13), wherein the strength is higher in the edge zone (22) than in the central region (13), and wherein the strength of the edge zone (22) is increased in relation to the strength of the central region (13) by the action of force and/or pressure and/or heat and/or radiation energy onto the edge zone (22) during the cutting out and by the cutting out of the porous body (12) from the starting material (30),
   - insertion of the porous body (12) in a casting mould (31),
   - introduction of liquid casting material (G) into the casting mould to produce a receiver part (25) of the pressure release device (11) and to produce a form-fit and/or substance-bonded connection between the peripheral face (21) of the porous body (12) and the receiver part (25), such that the porous body (12) is arranged in a pressure release passage (26) of the receiver part (25).

2. Method according to claim 1, **characterized in that** the edge zone (22) has a lower porosity ($\phi$) and/or a smaller pore size (P) than the central region (13).

3. Method according to claim 2, **characterized in that** the porosity ($\phi 2$) and/or the pore size (P2) in the edge zone is reduced during cutting out of the porous body (12) from the porous starting material (30).

4. Method according to claim 3, **characterized in that** the porosity ($\phi 2$) and/or the pore size (P2) in the edge zone (22) is reduced by local melting and/or local flowing of the material of the porous body (12).

5. Method according to claim 3 or 4, **characterized in that** the porosity ($\phi 2$) and/or the pore size (P2) in the edge zone (22) is reduced by the action of force and/or pressure and/or heat and/or radiation energy.

6. Method according to claim 1 or 2, **characterized in that** the porous body (12) in the edge zone (22) has a ring part (27) which surrounds the central region (13) and has a material structure different from that of the central region (13).

7. Method according to any of the preceding claims, **characterized in that** at least one portion (31a) of the casting mould (31) is tempered by a tempering agent (34) before and/or after the filling of the casting material (G).

8. Method according to claim 7, **characterized in that** the portion of the casting mould (31) adjoining the porous body (12) is tempered via the tempering agent (34).

9. Method according to any of the preceding claims, **characterized in that** the pores of the porous body (12) in the edge zone (22) are completely closed.

**10.** Method according to any of the preceding claims, **characterized in that** the edge zone (22) has a maximum depth (T) of 0.5 to 10 millimetres at right angles to the peripheral face (21).

**11.** Method according to any of the preceding claims, **characterized in that** the porosity ($\phi$1) of the porous body (12) in the central region (13) is at least 60% and at most 80%.

**12.** Method according to any of the preceding claims, **characterized in that** the pore size (P1) of the porous body (12) in the central region (13) is at least 80 microns and at most 250 microns.

**13.** Method according to any of the preceding claims, **characterized in that** the porous body (12) is formed from fibres (18) which have a diameter of at least 70 microns and at most 130 microns.

**14.** Method according to any of the preceding claims, **characterized in that** the porous body (12) is made from stainless steel.

**Revendications**

**1.** Procédé de fabrication d'un dispositif de décharge de pression (11) pour un boîtier antidéflagrant (10), comprenant les étapes suivantes :

- préparation d'un corps poreux (12) perméable au gaz, par découpe dans un matériau de départ (30) poreux,
- réalisation, sur le corps poreux (12), d'une zone de bord (22) qui présente une surface périphérique (21) entourant la partie centrale (13) du corps poreux (12), la zone de bord (22) formant ou présentant une barrière (B) contre la pénétration d'un matériau de coulée (G) liquide dans la partie centrale (13), à travers la surface périphérique (21) ; la résistance étant plus grande dans la zone de bord (22) que dans la partie centrale (13), et la résistance de la zone de bord (22) étant augmentée par rapport à la résistance de la partie centrale (13), par l'action d'une force et/ou d'une pression et/ou de la chaleur et/ou d'une énergie de rayonnement sur la zone de bord (22), pendant la découpe et du fait de la découpe du corps poreux (12) dans un matériau de départ (30),
- mise en place du corps poreux (12) dans un moule (31),
- introduction de matériau de coulée (G) liquide dans le moule, en vue de la fabrication d'un élément de réception (25) du dispositif de décharge de pression (11) et en vue de l'établissement d'une liaison par forme et/ou par matière entre la surface périphérique (21) du corps poreux (12) et l'élément de réception (25), de manière à ce que le corps poreux (12) soit disposé dans un passage de décharge de pression (26) de l'élément de réception (25).

**2.** Procédé selon la revendication 1, **caractérisé en ce que** la zone de bord (22) présente une porosité ($\Phi$) plus faible et/ou une grosseur de pores (P) plus faible que la partie centrale (13).

**3.** Procédé selon la revendication 2, **caractérisé en ce que** la porosité ($\Phi$2) et/ou la grosseur de pores (P2) dans la zone de bord (22) est réduite pendant le découpage du corps poreux (12) dans le matériau de départ (30) poreux.

**4.** Procédé selon la revendication 3, **caractérisé en ce que** la porosité ($\Phi$2) et/ou la grosseur de pores (P2), dans la zone de bord (22), est réduite par fusion locale et/ou fluage local du matériau du corps poreux (12).

**5.** Procédé selon la revendication 3 ou 4, **caractérisé en ce que** la porosité ($\Phi$2) et/ou la grosseur de pores (P2), dans la zone de bord (22), est réduite par l'action d'une force et/ou d'une pression et/ou de chaleur et/ou d'une énergie de rayonnement.

**6.** Procédé selon la revendication 1 ou 2, **caractérisé en ce que** le corps poreux (12) présente, dans la zone de bord (22), un élément annulaire (27) qui entoure la partie centrale (13) et est constitué d'une structure de matériau différente de la partie centrale (13).

**7.** Procédé selon l'une des revendications précédentes, **caractérisé en ce qu'**au moins une partie (31a) du moule (31) est mise à température par un agent de mise à température (34), avant et/ou après l'introduction du matériau de coulée (G).

**8.** Procédé selon la revendication 7, **caractérisé en ce que** la partie du moule (31) qui est adjacente au corps poreux (12) est mise à température par l'intermédiaire de l'agent de mise à température (34).

**9.** Procédé selon l'une des revendications précédentes, **caractérisé en ce que** les pores du corps poreux (12) sont complètement fermés dans la zone de bord (22).

**10.** Procédé selon l'une des revendications précédentes, **caractérisé en ce que** la zone de bord (22) présente une profondeur (T) maximale de 0,5 à 10 millimètres, à angle droit par rapport à la surface périphérique (21).

**11.** Procédé selon l'une des revendications précédentes, **caractérisé en ce que** dans la partie centrale (13), la porosité (Φ1) du corps poreux (12) est au minimum de 60 % et au maximum de 80 %.

**12.** Procédé selon l'une des revendications précédentes, **caractérisé en ce que** dans la partie centrale (13), la grosseur de pores (P1) du corps poreux (12), est au minimum de 80 micromètres et au maximum de 250 micromètres.

**13.** Procédé selon l'une des revendications précédentes, **caractérisé en ce que** le corps poreux (12) est constitué de fibres (18) qui présentent un diamètre d'au minimum 70 micromètres et d'au maximum 130 micromètres.

**14.** Procédé selon l'une des revendications précédentes, **caractérisé en ce que** le corps poreux (12) est réalisé à partir d'acier inoxydable.

Fig.1

Fig.2

Fig.3

Fig.4

Fig.5

Fig.6

Fig.7a

Fig.7b

14

Fig.8

Fig.9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4180177 A
- DE 102010016782 A1
- GB 2328508 A
- US 6202472 B1